# FASCICULE DE BREVET EUROPEEN

(11) **EP 2 435 771 B1**
(45) Date de publication et mention de la délivrance du brevet: **08.07.2015**
(21) Numéro de dépôt: 10723171.4
(22) Date de dépôt: 06.05.2010
(51) Int. Cl.: F26B 3/20

(54) **PROCEDE DE TRAITEMENT THERMIQUE DE BIOMASSE AVEC UN SOLIDE CALOPORTEUR**
VERFAHREN ZUR WÄRMEBEHANDLUNG EINER BIOMASSE MIT WÄRMETRANSFER-FESTSTOFF
METHOD FOR THERMAL TREATMENT OF BIOMASS WITH A HEAT-TRANSFER SOLID

(30) Priorité: 29.05.2009 FR 0902623
(43) Date de publication de la demande: 04.04.2012
(73) Titulaire: IFP Energies nouvelles, 92852 Rueil-Malmaison Cedex (FR)
(72) Inventeur: SANZ GARCIA, Elena, F-69001 Lyon (FR); ROLLAND, Mathieu, F-69390 Vernaison (FR)
(86) Numéro de dépôt international: PCT/FR2010/000353
(87) Numéro de publication internationale: WO 2010/136662

(56) Documents cités:
- DE-A1-102007 015 089
- DE-B- 1 028 095
- FR-A- 458 373
- FR-A- 497 476
- FR-A- 1 414 191
- US-A- 4 750 913
- US-A- 5 215 670

## Description

La présente invention concerne les procédés de traitement thermique de matériaux solides avec solide caloporteur, et plus particulièrement un procédé de torréfaction, ou de pyrolyse suivant les températures utilisées, de matériaux solides tels que des déchets de toute nature, ou par exemple de la biomasse, avec un solide caloporteur.

La torréfaction est un traitement thermique de matériaux solides et par exemple de la biomasse à des températures moyennes comprises en moyenne entre 200°C et 300°C et en absence d'oxygène. En dessous de 270-300°C selon les essences, les réactions de torréfaction sont endothermiques et nécessitent un apport de chaleur pour se faire. Au dessus d'une température de 270-300°C selon les essences, des réactions exothermiques de dégradation de la biomasse commencent et s'auto-entretiennent par effet d'accélération thermique des cinétiques. Ces réactions conduisent à des solides pyrolysés ayant perdu une grande quantité de leur masse et de leur énergie. La perte de rendement est importante. D'un point de vue économique, lorsque le traitement thermique désiré est la torréfaction, il est nécessaire de se placer dans des conditions où les réactions exothermiques ne peuvent avoir lieu, ce qui impose de limiter la température de contact des parois chaudes. Dans le cas où le traitement thermique désiré est la pyrolyse, il est alors nécessaire de se placer au delà de 300°C, et plus particulièrement entre 400°C et 700°C.

L'objectif de la torréfaction de biomasse est en général l'obtention d'une charge pouvant être utilisée dans d'autres procédés comme par exemple la production de combustibles pour produire de l'électricité ou la production d'hydrocarbures liquides de type diesel, gazole, kérosène. Dans certains cas, il est nécessaire de torréfier la biomasse avant l'étape de gazéification préalable aux traitements permettant d'arriver aux hydrocarbures.

Il est déjà connu dans l'art antérieur des procédés de préparation d'un mélange de charges en vue de la gazéification en préparant les charges individuellement puis en les mélangeant. La préparation de la biomasse comprend le séchage, la torréfaction et le broyage de la biomasse, ou l'une quelconque de ces étapes. L'énergie nécessaire au séchage et à la torréfaction de la biomasse peut être apportée par différentes technologies :
- par flux gazeux : la circulation de gaz chauds (vapeur, dioxyde de carbone, azote) apporte l'énergie nécessaire. Cependant, cette solution est actuellement très coûteuse du fait des débits très élevés nécessaires à des échelles industrielles (120 t/h), et est donc difficilement applicable aux installations industrielles notamment de torréfaction.
- par contact avec une paroi chaude : par exemple four tournant ou four à vis. Mais la température des parois, et donc la capacité des fours à l'échelle industrielle, est limitée du fait des emballements thermiques des réactions de torréfaction (à partir de 270°C-300°C). En effet, dans la gamme de températures requises (entre 200 et 300°C), les transferts radiatifs sont négligeables. Il est donc nécessaire, afin d'augmenter le transfert thermique, d'augmenter le transfert par conduction. Les transferts par conduction sont proportionnels à la surface de contact, à l'écart de température entre la charge et la paroi et à la conductivité thermique de la charge qui est faible dans le cas présent (typiquement 10-20 W/m²/°C pour le bois). L'écart de température charge-paroi est limité par la nature même de la biomasse lignocellulosique (emballement des réactions si points chauds au delta de 270°C-300°C). La seule option pour augmenter les flux thermiques est donc d'augmenter la surface, et donc le volume des fours.
- par rayonnement direct d'une flamme en sortie d'un brûleur. Cette technologie a comme inconvénient la possible génération de points très chauds près de la flamme, ainsi que le risque d'exposition de la charge avec de l'oxygène issu d'une combustion incomplète.
- par mélange avec un solide caloporteur : les solides sont choisis pour leur inertie thermique et leur capacité à être recyclé dans l'installation après leur mélange avec la biomasse (résistance à l'abrasion et facilité de mise en transport) et leur coût. Les sables ou céramiques (alumine, alumino-silicates) sont les meilleurs choix selon ces critères. Par contre, leur utilisation avec de la biomasse nécessiterait une séparation parfaite pour éviter la dégradation du broyeur à biomasse (abrasion) en aval du sécheur ou du torréfieur, ainsi que celle du brûleur et des parois du gazéifieur. Du fait du caractère fibreux du bois, il est impossible de réaliser une séparation parfaite, ce qui conduit à écarter la technologie à base de sables ou céramiques pour le séchage et la torréfaction de biomasse.

Le document DE 1028095 divulgue un procédé de traitement thermique selon le préambule de la revendication 1.

La présente invention a donc pour objet de palier un ou plusieurs des inconvénients de l'art antérieur en proposant un procédé de traitement thermique de matériaux solides avec un solide caloporteur, par exemple de type biomasse permettant d'améliorer le traitement thermique, et par exemple la torréfaction, de matériaux solides sans investissement coûteux.

Pour cela la présente invention propose un procédé de traitement thermique de matériau solide, avec un solide caloporteur, dans lequel on réalise une étape de mélange du matériau solide avec le solide caloporteur préalablement chauffé, le solide caloporteur étant un solide à fort taux de carbone.

Selon l'invention, le solide à fort taux de carbone est broyé, avant l'étape de mélange avec le matériau solide, pour obtenir une poudre de solide à fort taux de carbone de granulométrie comprise entre 20µm et 300µm.

Selon l'invention, le matériau solide est déchiqueté, avant l'étape de mélange avec le solide à fort taux de carbone, pour obtenir des plaquettes de matériau solide.

Selon l'invention, les plaquettes de matériau solide ont une épaisseur comprise entre 5 mm et 25 mm, une largueur comprise entre 15mm et 25 mm et une longueur comprise entre 25 mm et 75 mm.

Selon l'invention, le solide à fort taux de carbone est chauffé, avant le mélange, à une température comprise entre 330°C et 592°C.

Selon un mode de réalisation de l'invention, le mélange est réalisé dans un réacteur de type four tournant, four à vis, four à soles, lit fluidisé bouillonnant ou lit fluidisé circulant.

Selon un mode de réalisation de invention, les parois du four tournant sont chauffées à une température comprise entre 80°C et 700°C.

Selon un mode de réalisation de l'invention, le matériau solide est de la biomasse.

Selon un mode de réalisation de l'invention, le taux d'humidité de la biomasse est compris entre 10 et 50%.

Selon un mode de réalisation de l'invention, le solide à fort taux de carbone est du coke de pétrole ou du charbon ou des dérivés du charbon ou de l'anthracite ou des résidus de désalphaltage.

Selon un mode de réalisation de l'invention, le traitement thermique est un traitement de séchage.

Selon un autre mode de réalisation de l'invention, le traitement thermique est un traitement de torréfaction.

Selon un autre mode de réalisation de l'invention, le traitement thermique est un traitement de pyrolyse.

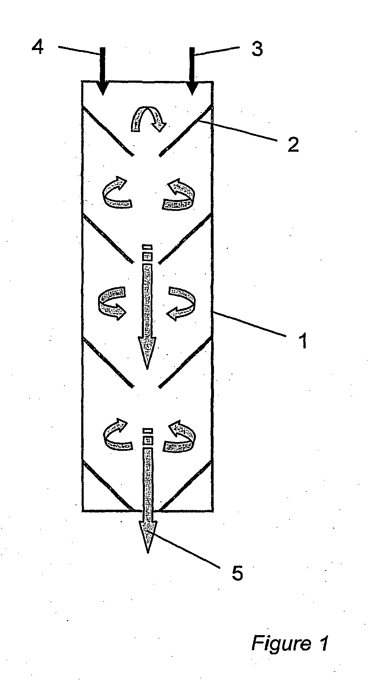

D'autres caractéristiques et avantages de l'invention seront mieux compris et apparaîtront plus clairement à la lecture de la description faite, ci-après, en se référant à figure 1 annexée, donnée à titre d'exemple et qui est une représentation schématique d'une variante d'une mise en oeuvre du procédé selon l'invention.

L'invention concerne un procédé de traitement thermique comme par exemple le séchage, la torréfaction ou la pyrolyse, de matériaux solides et par exemple des déchets de type ménagers, agricoles, industriels, et de la biomasse solide. La biomasse solide traitée dans le procédé selon l'invention peut être par exemple de la ligno-cellulose (bois, paille, algues, résidus forestiers et agricoles), de la lignine purifiée, de la cellulose ou un mélange de ces différentes biomasses. La torréfaction réalisée dans le cadre de l'invention consiste en un traitement thermique réalisé à des températures moyennes comprises en générale entre 200°C et 300°C, et de préférence entre 220°C et 280°C et en absence d'oxygène.

La pyrolyse réalisée dans le cadre de l'invention consiste en un traitement thermique réalisé à des températures moyennes comprises en générale entre 300°C et 700°C et en absence d'oxygène.

Le procédé peut également être utilisé uniquement pour sécher le matériau solide. Dans ce cas les températures de traitement thermique sont inférieures à celles auxquelles est réalisée la torréfaction, entre 80°C et 150°C.

Le procédé peut ainsi être mis en oeuvre à des températures allant de 80°C pour le séchage à 700°C pour la pyrolyse.

Le procédé de traitement thermique selon l'invention consiste à utiliser un solide caloporteur, en mélange avec le matériau solide dans un réacteur chauffant, qui ne nécessite pas de séparation à la fin du traitement thermique. Pour cela, dans le procédé selon l'invention, le solide caloporteur utilisé est un combustible solide à fort taux de carbone. Le solide à fort taux de carbone est éliminé ou consommé lors des utilisations ultérieures du mélange, par exemple lors de la gazéification. Il ne nécessite donc pas de séparation à la fin du traitement thermique. Les caloporteurs solides utilisables dans le procédé selon l'invention sont généralement des solides à fort taux de carbone par exemple: le coke de pétrole (également appelé petcoke pour petroleum coke selon la terminologie anglo-saxonne), le charbon, les dérivés du charbon, l'anthracite, les résidus de désalphaltage.

Avant d'être mélangé avec le matériau solide à torréfier, le solide à fort taux de carbone doit être broyé car les mécanismes de broyage de ces deux matériaux sont différents. Le broyage du solide à fort taux de carbone se fait en général par écrasement, ou tout autre technique équivalente bien connue de l'homme du métier et permettant d'obtenir une poudre de solide à fort taux de carbone de granulométrie très fine, comprise entre 20µm et 300µm et de préférence entre 50µm et 200µm. Une granulométrie très fine permet une augmentation de la surface de contact du solide à fort taux de carbone avec le matériau solide ce qui augmente également le transfert thermique par conduction et permet ainsi un meilleur traitement thermique.

Le broyage du solide à fort taux de carbone est généralement réalisé sous un flux d'azote chaud pour le sécher et prévenir toute mise en contact avec l'air ambiant. Ce flux d'azote chaud est à une température comprise en générale entre 250-500°C et peut avantageusement être utilisé pour également chauffer le solide à fort taux de carbone.

Avant le mélange avec le solide à fort taux de carbone, le matériau solide et plus particulièrement la biomasse doit être déchiqueté ou broyée par cisaillement ou tout autre technique équivalente bien connue de l'homme du métier et permettant d'obtenir des plaquettes de matériau solide.

Les plaquettes ont une épaisseur comprise entre 5 mm et 25 mm, et de manière préférée entre 5 mm et 10 mm, leur largeur est comprise entre 15 mm et 25 mm, et de manière préférée entre 18 mm et 22 mm, leur longueur est comprise entre 25 mm et 75 mm, et de manière préférée entre 45 mm et 55 mm. Les plaquettes ainsi obtenues peuvent être directement mélangées au solide à fort taux de carbone sans séchage préalable.

Le matériau solide peut éventuellement être utilisé humide, le taux d'humidité étant compris entre 10 et 50 %.

Selon une variante du procédé le matériau solide est séché avant d'être mélangé avec le solide à fort taux de carbone, dans ce cas le taux d'humidité est inférieur à 15 %.

Le solide à fort taux de carbone est chauffé avant d'être mélangé avec le matériau solide.

En général, l'introduction du matériau solide et du solide à fort taux de carbone se fait séparément par des trémies d'alimentation séparées. L'introduction du matériau solide et du solide à fort taux de carbone peut également se faire par toutes méthodes classiques d'introduction dans un four, bien connues de l'homme du métier.

La température d'injection du solide à fort taux de carbone doit être suffisante pour que la température de mélange soit dans la plage de température des réactions voulues (séchage, torréfaction ou pyrolyse). Pour que la température voulue du mélange soit comprise entre 80°C et 700°C, il est donc nécessaire que la température du solide soit supérieure à cette température voulue. En effet lors du mélange, la température du mélange est inférieure à celle du solide à fort taux de carbone suite aux échanges thermiques entre le solide à fort taux de carbone et le matériau solide. Le solide à fort taux de carbone est donc chauffé avant d'être mélangé au matériau solide à une température comprise entre 330°C et 592°C et manière préférée entre 350°C et 550°C. La température de chauffage est en général définie en fonction de la température finale voulue pour le mélange, et la température initiale du matériau solide. En effet, suivant que le matériau solide est mélangé humide ou séché sa température initiale n'est pas la même. En général la température initiale du matériau solide est comprise entre la température ambiante (par exemple 15°C) et 180°C, de préférence entre 20°C et 150°C et manière très préférée entre 25°C et 120°C.

Le chauffage préalable du matériau solide d'une part et du solide à fort taux de carbone d'autre part peut se faire selon toutes techniques bien connues de l'homme du métier et par exemple dans un four tournant chauffé à la vapeur ou avec des fumées de combustion, dans un four à étage basse température, par passage dans un tunnel chauffé, dans un four à vis, par échange avec des gaz chauds en sortie du broyeur.

Lors du mélange matériau solide/hydrocarbure solide, le solide à fort taux de carbone se dépose en plusieurs couches autour de chaque plaquette de matériau solide. Il est possible que des points chauds se produisent lors de la mise en contact des plaquettes de matériau solide avec la première couche de poudre de solide à fort taux de carbone. Cependant ce phénomène est très court et reste sans effet sur la biomasse. En effet, la taille de particule d'hydrocarbure solide étant faible, la chaleur disponible est également faible (de l'ordre de 0.3 mJ). Cette chaleur est dans un premier temps utilisée pour l'évaporation de l'eau présente dans le matériau solide sous forme d'humidité (matériau solide humide) ou d'eau liée (matériau solide sec). Le changement de phase, c'est à dire l'évaporation de l'eau, consomme l'intégralité de la chaleur apportée par la première couche de solide à fort taux de carbone. Le solide à fort taux de carbone présent dans le mélange, et refroidi par son contact avec l'ensemble du matériau solide, se dépose, par effet du brassage, pour former une nouvelle couche sur les plaquettes de matériau solide. La première couche, ainsi que les suivantes, sert d'isolant à la plaquette de matériau solide et limite ainsi le flux thermique. Les plaquettes de matériau solide ne sont ainsi pas exposées à des températures supérieures à 280°C en général.

Le mélange est effectué dans un réacteur chauffant avec brassage du lit, et par exemple dans:
- un four tournant,
- un four à vis,
- un four à soles,
- un lit fluidisé bouillonnant.

### Mise en oeuvre du procédé dans un four:

Lors de la mise en contact de la poudre de solide à fort taux de carbone et du matériau solide dans un four tournant, à vis ou à soles, les parois du four sont chauffées dans le cas de la torréfaction à une température comprise entre 150°C et 300°C ,et du préférence entre 180°C et 280°C par circulation externe de gaz chaud ou par des résistances électriques ou par des brûleurs disposés à l'extérieur du four. En général, la partie terminale du four n'est pas chauffée pour permettre le refroidissement à température ambiante du mélange avant la sortie du four.

En sortie du four il est possible de prévoir un système de séparation grossière du solide à fort taux de carbone et du matériau solide torréfié pour que tout le solide à fort taux de carbone ne soit pas broyé ensuite avec le matériau solide torréfié.

Il est également possible de prévoir une re-circulation du solide à fort taux de carbone au cours de laquelle il est re-chauffé à nouveau (transport pneumatique ou bien vis sans fin) avant d'être re-injecté dans la trémie d'alimentation.

Le matériau solide séché, torréfié, ou pyrolysé est ensuite injecté, en mélange ou pas avec le solide à fort taux de carbone suivant qu'il y'a eu ou pas séparation grossière, dans un broyeur à matériau solide.

### Mise en oeuvre du procédé dans un lit fluidisé bouillonnant :

La mise en contact de la poudre de solide à fort taux de carbone et du matériau solide peut également se faire dans un réacteur parfaitement agité du type lit fluidisé bouillonnant.

L'injection dans le lit fluidisé se fait pour le matériau solide par gravité et pour le solide à fort taux de carbone par injection pneumatique (transport en phase dense avec le gaz de fluidisation). Afin de contrôler le temps de séjour des particules dans le réacteur, qui est en général compris entre 8 min et 180 min, et de préférence entre 20 min et 60 min, deux solutions sont possibles :
- utilisation de plusieurs réacteurs parfaitement agités en série : le passage de la charge de réacteur à réacteur ainsi que la récupération du produit se fait par débordement.
- utilisation d'un réacteur (1) avec des internes (2) : les charges biomasse (4) et solide à fort taux de carbone (3) sont introduites par le haut ou par un côté du réacteur, et le lit fluidisé parfaitement agité se déplace vers le bas ou vers le côté opposé du réacteur à la façon d'un lit mobile grâce à l'action des internes. Le produit est récupéré en bas (5) du réacteur comme illustré sur la figure 1. Cette solution est équivalente à la première, il s'agit d'une série de lits fluidisés agités mais dans le même réacteur.

Tout comme pour la mise en oeuvre dans un four, en sortie du réacteur il est possible de prévoir un système de séparation grossière du solide à fort taux de carbone et du matériau solide torréfié pour que tout le solide à fort taux de carbone ne soit pas broyé ensuite avec le matériau solide torréfié.

Il est également possible de prévoir une re-circulation du solide à fort taux de carbone au cours de laquelle il est re-chauffé à nouveau (transport pneumatique ou bien vis sans fin) avant d'être re-injecté dans la trémie d'alimentation.

Le matériau solide séché, torréfié, ou pyrolysé est ensuite injecté, en mélange ou pas avec l'hydrocarbure solide suivant qu'il y'a eu ou pas séparation grossière, dans un broyeur à matériau solide.

Les exemples comparatifs suivants illustrent la présente invention.

### Exemples 1 à 4 :

La mise en contact, entre le matériau solide (charge 1) qui est dans ces exemples de la biomasse et l'hydrocarbure solide (charge 2) qui est du coke de pétrole, est réalisée dans un four tournant dont les parois sont chauffées à 250°C par circulation externe de gaz chaud. La partie terminale du four n'est pas chauffée pour permettre le refroidissement à température ambiante du mélange avant la sortie du four.

Les températures initiales et finales sont déterminées en fonction des enthalpies des deux charges.

| | exemple 1 (torréfaction) | exemple 2 (torréfaction) | exemple 3 (torréfaction) | exemple 4 (séchage) |
|---|---|---|---|---|
| température initiale (°C) de la biomasse humide (taux d'humidité 25%) | | | 25 | 25 |
| température initiale (°C) de la biomasse sèche | 100 | 100 | | |
| température initiale (°C) du coke de pétrole | 568 | 330 | 592 | 340 |
| Quantité biomasse/coke de pétrole (% masse) | 80/20 | 50/50 | 50/50 | 50/50 |
| température finale (°C) | 250 | 250 | 250 | 100* |

| | | | | |
|---|---|---|---|---|
| * la biomasse est totalement séchée. | | | | |

Ces exemples illustrent que quelque soit la température initiale de la biomasse, il est possible d'obtenir une biomasse parfaitement séchée ou torréfiée simplement en adaptant la température de l'hydrocarbure solide ainsi que ces quantités.

### Exemple 5 :

Cet exemple a pour but de déterminer le temps nécessaire pour arriver à une température d'équilibre entre la biomasse et le coke de pétrole.

Les simulations du transfert thermique instationnaire en 2D sont réalisées avec le logiciel Comsol®. Le cas étudié est le suivant :
- Lit de coke de pétrole (60 mm x 60 mm) avec 4 plaquettes de biomasse (épaisseur 10 mm, longueur 30 mm).
- T_{coke} de pétrole = 300° C
- T_{biomasse}= 100 °C *
- P_{coke} de pétrole = 600 kg/m³ (densité apparente) ; cp_{coke} de pétrole, = 3200 J/Kg K ; λ_{coke} de pétrole = 0.4 W/m k (conductivité)
- ρ_{biomasse} = 600 kg/m³ (densité de la particule); cp_{biomasse}, = 1700 J/Kg K (chaleur massique); λ_{biomasse} = 0.1 W/m k (conductivité).
- Pour simuler le brassage, la conductivité du coke de pétrole est augmentée à 40 W/m k (facteur 100). Cependant, autour de chaque plaquette de biomasse une fine couche de coke de pétrole (0,5 mm) reste collée (dû à la rugosité de la surface de la biomasse) et elle ne participe pas au brassage. Dans cette zone, la conductivité réelle du coke de pétrole est maintenue.

La couche de coke de pétrole qui reste collée à la paroi de la plaquette de biomasse permet une isolation suffisante dans les premières secondes de contact entre les deux solides, et la température maximale de la surface des plaquettes de biomasse à l'instant initial est de 274°C. La température d'équilibre (257°C) est atteinte au bout de 8,3 minutes. La température à l'intérieure des plaquettes est bien homogène (écart maximale inférieur à 1°C au bout de 8 minutes).

Ces résultats montrent que le temps nécessaire pour arriver à une température d'équilibre entre la biomasse et le coke de pétrole est assez réduit.

### Exemple 6 :

A partir des résultats de l'exemple 5, il est possible de réaliser le dimensionnement d'un four.

### • cas d'un four tournant:

- taux de remplissage de 20%,
- 10t/h de biomasse + 10t/h de coke de pétrole traitées,
- temps de séjour de 10 minutes.

Les dimensions obtenues pour le four tournant sont : Longueur = 10 m et Diamètre = 2 m.

### • cas d'un four à vis :

- taux de remplissage de 55%,
- 10t/h de biomasse + 10t/h de coke de pétrole traitées,
- temps de séjour de 10 minutes.

Les dimensions obtenues pour le four tournant sont : Longueur = 6,5 m et Diamètre = 1,5 m.

Ces résultats mettent en évidence le fait que le procédé selon l'invention permet d'utiliser des fours de dimensions classiques, voir même de plus petites dimensions. En effet, la grande porosité du lit des plaquettes de biomasse fait que les interstices sont remplis par le coke de pétrole, et de ce fait, l'augmentation du volume dû à l'ajout de coke de pétrole n'est pas trop pénalisante.

### Exemple 7 :

La mise en contact, entre le matériau solide (charge 1) qui est dans cet exemple de la biomasse et l'hydrocarbure solide (charge 2) qui est du coke de pétrole, est réalisée dans un lit fluidisé de coke de pétrole chaud. Les tests ont consisté à chauffer un lit de coke de pétrole fluidisé à l'azote jusqu'à une température d'environ 300°C, à l'intérieur d'un réacteur en quartz. Le réacteur, d'un diamètre intérieur de 50 mm est placé dans un four tubulaire chauffé électriquement. Lorsque le lit fluidisé atteint la température désirée, une quantité (masse identique à celle du coke de pétrole) de plaquettes de bois (préalablement étuvée à 100°C) est introduite dans le réacteur en même temps que le chauffage du four est arrêté. Les résultats sont les suivants :
- Le coke de pétrole ne perd pas ses propriétés jusqu'à 360°C sous azote (mis à part un peu d'attrition). Il n'y a pas de dégagement gazeux.
- Bien qu'après addition des plaquettes, la fluidisation soit interrompue, la coloration de celles-ci après le traitement thermique est homogène et il n'y a pas de formation des points chauds.
- Un test réalisé sans lit de coke de pétrole donne une perte de masse des plaquettes 2 fois plus faible qu'avec présence du lit et une coloration non homogène. Le lit de coke de pétrole favorise donc bien les échanges thermiques.

Le procédé de traitement thermique selon l'invention, consistant à mélanger un solide à fort taux de carbone avec un matériau solide de type biomasse, permet de réaliser le séchage et/ou la torréfaction de la biomasse avec un meilleur transfert thermique par conduction que les techniques classiquement utilisées et sans investissement coûteux, il y a donc une réduction du temps de séjour. Cela s'explique par le fait que le coke de pétrole chaud couvre toute la surface de la biomasse. A iso capacité, les installations sont plus petites.

De plus, la présence du solide à fort taux de carbone dans le mélange conduit à des effets positifs sur le broyage ultérieur de la biomasse séchée ou torréfiée en induisant des effets d'attrition qui permettent d'obtenir des particules de biomasse plus rondes et plus facile à injecter dans le gazéifieur. Le mélange sortant du broyeur peut directement être injecté dans un gazéifieur sous pression par voie sèche par exemple.

Le flux d'azote chaud sortant du broyeur de solide à fort taux de carbone peut avantageusement être utilisé pour chauffer ce même solide à fort taux de carbone avant son mélange avec le matériau solide. Cela permet une intégration thermique favorisant une économie de l'énergie.

## Revendications

1. Procédé de traitement thermique de matériau solide, avec un solide caloporteur, dans lequel on réalise une étape de mélange du matériau solide avec le solide caloporteur préalablement chauffé, le solide caloporteur étant un combustible solide à fort taux de carbone, qui ne nécessite pas de séparation à la fin du traitement thermique, le solide à fort taux de carbone étant broyé, avant l'étape de mélange avec le matériau solide, pour obtenir une poudre de solide à fort taux de carbone de granulométrie comprise entre 20µm et 300µm et chauffé, avant le mélange, à une température comprise entre 330 et 592°C, **caractérisé en ce que** le matériau solide est déchiqueté, avant l'étape de mélange avec le solide caloporteur, pour obtenir des plaquettes de materiau solide, les plaquettes de matériau solide ayant une épaisseur comprise entre 5 mm et 25 mm, une largueur comprise entre 15 mm et 25 mm et une longueur comprise entre 25 mm et 75 mm.

2. Procédé selon la revendication 1 dans lequel le mélange est réalisé dans un réacteur de type four tournant, four à vis, four à soles, lit fluidisé bouillonnant ou lit fluidisé circulant.

3. Procédé selon la revendication 2 dans lequel le mélange est réalisé dans un réacteur de type four tournant et les parois du four tournant sont chauffées à une température comprise entre 80°C et 700°C.

4. Procédé selon une des revendications 1 à 3 dans lequel le matériau solide est de la biomasse.

5. Procédé selon la revendication 4 dans lequel le taux d'humidité de la biomasse est compris entre 10 et 50%.

6. Procédé selon une des revendications 1 à 5 dans lequel le solide à fort taux de carbone est du coke de pétrole ou du charbon ou des dérivés du charbon ou de l'anthracite ou des résidus de désalphaltage.

7. Procédé selon une des revendications 1 à 6 dans lequel le traitement thermique est un traitement de séchage.

8. Procédé selon une des revendications 1 à 7 dans lequel le traitement thermique est un traitement de torréfaction.

9. Procédé selon une des revendications 1 à 8 dans lequel le traitement thermique est un traitement de pyrolyse.

## Patentansprüche

1. Verfahren zur Wärmebehandlung von festen Materialien mit einem Wärmeträger-Feststoff, wobei ein Schritt zum Mischen des festen Materials mit dem vorher erwärmten Wärmeträger-Feststoff durchgeführt wird, wobei der Wärmeträger-Feststoff ein fester Brennstoff mit hohem Kohlenstoffanteil ist, der am Ende der Wärmebehandlung nicht abgetrennt werden muss, wobei der Feststoff mit hohem Kohlenstoffanteil vor dem Schritt zum Mischen mit dem festen Material gemahlen wird, um ein Pulver des Feststoffs mit hohem Kohlenstoffanteil mit einer Granulometrie im Bereich zwischen 20 µm und 300 µm zu erhalten und er vor dem Mischen auf eine Temperatur im Bereich zwischen 330 und 592 °C erwärmt wird, **dadurch gekennzeichnet, dass** das feste Material vor dem Schritt zum Mischen mit dem Wärmeträger-Feststoff zerkleinert wird, um Plättchen aus dem festen Material zu erhalten, wobei die Plättchen aus festem Material eine Dicke im Bereich zwischen 5 mm und 25 mm, eine Breite im Bereich zwischen 15 mm und 25 mm und eine Länge im Bereich zwischen 25 mm und 75 mm aufweisen.

2. Verfahren nach Anspruch 1, wobei das Mischen in einem Reaktor vom Typ Drehofen, Ofen mit Transportschnecke, Etagenofen, Ofen mit stationärer Wirbelschicht oder zirkulierender Wirbelschicht durchgeführt wird.

3. Verfahren nach Anspruch 2, wobei das Mischen in einem Reaktor vom Typ Drehofen durchgeführt wird und die Wände des Drehofens auf eine Temperatur im Bereich zwischen 80 °C und 700 °C erwärmt werden.

4. Verfahren nach einem der Ansprüche 1 bis 3, wobei es sich bei dem festen Material um Biomasse handelt.

5. Verfahren nach Anspruch 4, wobei der Feuchtigkeitsgehalt der Biomasse im Bereich zwischen 10 und 50 % liegt.

6. Verfahren nach einem der Ansprüche 1 bis 5, wobei es sich bei dem Feststoff mit hohem Kohlenstoffanteil um Petrolkoks oder Kohle oder Kohlederivate oder Anthrazit oder Rückstände aus der Deasphaltierung handelt.

7. Verfahren nach einem der Ansprüche 1 bis 6, wobei es sich bei der Wärmebehandlung um eine Trocknungsbehandlung handelt.

8. Verfahren nach einem der Ansprüche 1 bis 7, wobei es sich bei der Wärmebehandlung um eine Torrefizierungsbehandlung handelt.

9. Verfahren nach einem der Ansprüche 1 bis 8, wobei es sich bei der Wärmebehandlung um eine Pyrolysebehandlung handelt.

## Claims

1. Process for heat treatment of a solid, with a heat carrier solid, in which a stage for mixing the solid with the pre-heated heat carrier solid is carried out, with the heat carrier solid being a combustible solid with a high carbon content that needs not be separated once the heat treatment step has been carried out, in which the solid with a high carbon content is ground, before the mixing stage with the solid, to obtain a solid powder with a high carbon content with a grain size of between 20 µm and 300 µm and heated, before mixing, to a temperature of between 330°C and 592°C, **characterized in that** the solid is shredded, before the mixing stage with the heat carrier solid, to obtain solid pellets, said solid pellets having a thickness of between 5 mm and 25 mm, a width of between 15 mm and 25 mm, and a length of between 25 mm and 75 mm.

2. Process according to claim 1, in which the mixing is carried out in a reactor such as a rotary furnace, a screw furnace, a hearth furnace, a boiling fluidized bed or a circulating fluidized bed.

3. Process according to Claim 2, in which the mixing is performed in a rotary furnace type reactor and the walls of the rotary furnace are heated at a temperature of between 80°C and 700°C.

4. Process according to one of Claims 1 to 3, in which the solid is biomass.

5. Process according to Claim 4, in which the level of moisture of the biomass is between 10 and 50%.

6. Process according to one of Claims 1 to 5, in which the high carbon content solid is petroleum coke or carbon or derivatives of carbon or anthracite or deasphalting residues.

7. Process according to one of Claims 1 to 6, in which the heat treatment is a drying treatment.

8. Process according to one of Claims 1 to 7, in which the heat treatment is a roasting treatment.

9. Process according to one of Claims 1 to 8, in which the heat treatment is a pyrolysis treatment.
